# EUROPÄISCHE PATENTSCHRIFT

(11) **EP 0 746 174 B1**
(45) Veröffentlichungstag und Bekanntmachung des Hinweises auf die Patenterteilung: **08.08.2007**
(21) Anmeldenummer: 95108384.9
(22) Anmeldetag: 31.05.1995
(51) Int. Cl.: H04Q 11/04

(54) **Verfahren zum Realisieren logischer Kommunikationspartner in Kommunikationssystemen**
Method for realising logical communications partners in communication systems
Procédé pour réaliser des partenaires de communications logiques dans des systèmes de communication

(43) Veröffentlichungstag der Anmeldung: 04.12.1996
(73) Patentinhaber: SIEMENS AKTIENGESELLSCHAFT, 80333 München (DE)
(72) Erfinder: Stöckl, Werner, Dr., D-82065 Baierbrunn (DE); Tietsch, Michael, D-86916 Kaufering (DE)

(56) Entgegenhaltungen:
- WO-A-94/05121
- SUPERCOMM/ICC'94, NEW ORLEANS, US Seiten 273 - 277, XP438924 'an object-oriented interface for a distributed connection manager'
- COMPUTER NETWORKS AND ISDN SYSTEMS, Bd.27, Nr.1, Oktober 1994, AMSTERDAM NL Seiten 5 - 27, XP468894 J.B. KIM ET AL. 'International standardization of B-ISDN'
- IEEE GLOBECOM '94, SAN FRANCISCO, US Seiten 639 - 643, XP488623 'Relation between call control and resource control in B-ISDN'

## Beschreibung

In Kommunikationssystemen, insbesondere öffentlichen oder privaten Vermittlungseinrichtungen, sind Vermittlungsprozedur-Strukturen bzw. Vermittlungsprogramm-Strukturen vorgesehen, bei denen die wesentlichen vermittlungstechnischen Funktionen, d.h. die vermittlungstechnische Steuerung einer Kommunikationsverbindung zwischen zumindest zwei an Kommunikationsanschlüsse der Vermittlungseinrichtung angeschlossene Kommunikationspartner, insbesondere Kommunikationsendgeräte, unter Einbeziehung der Informationen der schaltungstechnischen bzw. physikalischen Ausgestaltung der Kommunikationsanschlüsse realisiert sind. Kommunikationspartner stellen in Kommunikationssystemen sowohl Kommunikationsendgeräte von Teilnehmern als auch andere Vermittlungseinrichtungen oder Netzübergangseinrichtungen dar. Die Informationen über die schaltungstechnische bzw. physikalische Ausgestaltung der Kommunikationsanschlüsse sind bei der Ermittlung der wesentlichen vermittlungstechnischen, d.h. Kommunikationsverbindungen steuernde Einstellungen der schaltungstechnischen Komponenten, insbesondere eines Koppelfeldes und der Kommunikationsanschlußschaltungen, für das Bilden von Einstellinformationen erforderlich und sind daher an die Vermittlungsprogramm-Struktur zu übermitteln, in dieser zu speichern und zu bewerten, d.h. zu bearbeiten.

Aus der WO 94/05 121 ist bereits eine Vermittlungsprozedur-Struktur bekannt, bei der eine weitgehende Unabhängigkeit der physikalischen Einstellung der vermittlungstechnischen Ressourcen, insbesondere des Koppelfeldes, von der Verbindungssteuerung, d.h. der "Call"-Verarbeitung, vorgesehen ist. Die Unabhängigkeit wird im wesentlichen durch eine Aufteilung der Vermittlungsprozedur-Struktur in ein physikalischen und ein logisches Vermittlungs-Subprogrammodul erreicht, wobei aufgrund der vom logischen zum physikalischen Vermittlungs-Subprogrammodul übermittelten logischen Einstellinformationen die physikalischen Ressourcen, d.h. das Koppelfeld, physikalisch eingestellt werden. Die physikalischen Ressourcen eines Kommunikationspartners, dem beispielsweise Teile eines Kommunikationsanschlusses oder auch mehrere Kommunikationsanschlüsse einer Vermittlungseinrichtung zugeordnet sind, werden hierbei für die Vermittlungseinrichtung in "Access-Managern" zusammengefaßt und der Vermittlungsprogramm-Struktur direkt zugeordnet. Durch diese Aufteilung wird hinsichtlich der Einstellung des Koppelfeldes eine Unabhängigkeit zur Verbindungssteuerung erreicht, eine Unabhängigkeit hinsichtlich der Unabhängigkeit und Verwaltung der physikalischen Ressourcen der an eine Vermittlungseinrichtung angeschlossenen Kommunikationspartner bzw. deren Kommunikationseinrichtungen ist jedoch nicht vorgesehen. Dies bedeutet, daß bei einer physikalischen oder prozeduralen Änderung der physikalischen Ressourcen eines an die Vermittlungseinrichtung angeschlossenen Kommunikationspartners, d.h. bei einem Konfigurieren, nicht nur Änderungen in den administrativen und betriebstechnischen Programmen bzw. Speichern, sondern zusätzlich erhebliche Anpassungen in der Vermittlungsprogramm-Struktur durchgeführt werden müssen.

Des weiteren sind derartige Vermittlungsprogramm-Strukturen aufgrund erheblich mehr zu verarbeitender Informationen nicht für an Kommunikationssysteme anschließbare, physikalisch und prozedural sehr unterschiedliche Kommunikationseinrichtungen bzw. Kommunikationsendgeräte - z.B. für Schmalband und Breitband oder Multimedia-Kommunikationseinrichtungen - einsetzbar.

Die der Erfindung zugrunde liegende Aufgabe ist darin zu sehen, Vermittlungseinrichtungen mit einer Vermittlungsprogramm-Stuktur auszugestalten, die von der Konfiguration unterschiedlichster physikalischer Ressourcen der angeschlossenen Kommunikationspartner unter Berücksichtigung einer möglichst wirtschaftlichen Realisierung weitgehend unabhängig ist. Die Aufgabe wird durch die Merkmale des Patentanspruchs 1 gelöst.

Der wesentliche Aspekt des erfindungsgemäßen Verfahren ist darin zu sehen, daß mit Hilfe von in der Datenbasis eines Kommunikationssystems eingerichteten und verwalteten Zugriffssegmenten eine Verwaltungseinheit geschaffen wird, in der alle physikalischen Ressourcen eines Kommunikationspartners enthalten sind, wodurch eine weitgehende Trennung der prozeduralen vermittlungstechnischen Funktionen und der Verwaltung der Konfiguration der physikalischen Ressourcen der angeschlossenen Kommunikationspartner erreicht wird. Hierbei sind die prozeduralen vermittlungstechnischen Funktionen mit abstrahierten Beschreibungen der Kommunikationspartner, d.h. mit jeweils einer Identifikation und mit Informationen der Zugriffssegmente versehene Verbindungssegmente realisierbar. Dies bedeutet, daß die prozedurale vermittlungstechnische Software von der physikalischen Kommunikationsanschluß-, d.h. schaltungstechnikbezogenen Software getrennt ist. Durch diese Trennung sind prozedurale Vermittlungsprogramm-Strukturen realisierbar, die weitgehend unabhängig von den physikalischen und prozeduralen Eigenschaften der den Kommunikationspartner zugeordneten Kommunikationsanschlüsse und daher für erheblich unterschiedliche Ausprägungen der physikalischen Ressourcen der Kommunikationspartner einsetzbar sind. Des weiteren wirken sich Konfigurationen im Kommunikationssystem nicht auf die prozedurale Vermittlungsprozedur-Struktur aus, d.h. es sind keine Änderung erforderlich. Lediglich das Zugriffssegment ist einmal im Rahmen eines Konfigurierens des Kommunikationssystem zu aktualisieren.

Die Trennung ermöglicht weiterhin eine Realisierung der prozeduralen vermittlungstechnischen Funktionen in einer abstrahierten Ebene, wodurch eine erhebliche Reduzierung der zu übermittelnden, zu speichernden und zu bewertenden Informationsmenge bewirkt wird. Dies bedeutet zum einen eine schnellere Ermittlung der vermittlungstechnischen Einstellinformationen und zum anderen eine Reduzierung des Programmumfangs der Vermittlungsprogramm-Struktur.

Erfindungsgemäß weist jedes Zugriffssegment eine den Kommunikationspartner identifizierende Identifikation und zumindest eine jeweils auf einen Kommunikationsanschluß bezogene Anschlußübersicht auf. In eine Anschlußübersicht sind die physikalischen Ressourcen des dem jeweiligen Kommunikationspartner zugeordneten Kommunikationsanschlusses anzeigende Ressourceninformation sowie eine deren vermittlungstechnische Möglichkeit anzeigende Vermittlungsinformation eingetragen.

Vorzugsweise werden die Zugriffssegmente in der Datenbasis von im Asychron-Transfer-Modus wirkenden ATM-Kommunikationssystemen eingerichtet und verwaltet - Anspruch 2. Bei ATM-Kommunikationssystemen sind den Kommunikationspartnern aufgrund des erheblichen Umfangs der physikalischen Ressourcen eines Kommunikationsanschlusses, z.B. 155 Mbit/s, häufig Teile der physikalischen Ressourcen eines Kommunikationsanschlusses zugeordnet. Bei Breitband-Kommunikationspartnern, z.B. eine weitere Vermittlungseinrichtung, sind einem Kommunikationspartner die physikalischen Ressourcen mehrerer Kommunikationsanschlüsse zuordenbar. Da innerhalb eines ATM-Kommunikationssystems der Informationsfluß beispielsweise zwischen einer die Vermittlungsprozedur-Struktur realisierenden Steuereinrichtung und einer die physikalische Durchschaltung realisierenden Vermittlungseinrichtung bei einer Anwendung des erfindungsgemäßen Verfahrens deutlich reduziert wird, wird das erfindungsgemäße Verfahren insbesondere bei getrennt realisierten Steuer- und Vermittlungseinrichtungen eingesetzt.

Bei nach dem Asynchron-Transfer-Modus wirkenden Kommunikationssystemen sind kommunikationsanschlußbezogene Ressourceninformationen vorgesehen, die vorteilhaft durch eine die Anzahl virtueller Verbindungspfade anzeigende Verbindungspfadinformation sowie eine die Anzahl virtueller Kanäle in einem virtuellen Verbindungspfad anzeigende Kanalinformation, eine den Wertebereich der virtuellen Verbindungspfade und Kanäle angebende Werteinformationen, eine die maximale Transfergeschwindigkeit für den jeweiligen Kommunikationsanschluß anzeigende Transferinformation, eine die Zuordnung der virtuellen Pfadinformationen zu den virtuellen Verbindungspfadinformationen angebende Tabelle und eine die Übertragungs- oder Dienstklasse anzeigende Qualitätsinformation repräsentiert sind - Anspruch 3. Durch diese eingetragenen Informationen sind eindeutig die innerhalb eines Kommunikationsanschlusses einem Kommunikationspartner zugeordneten physikalischen Ressourcen definiert, wobei in einer vermittlungstechnischen, den Kommunikationsanschluß betreffenden Einstellmeldung, die das physikalische Durchschalten im Rahmen eines Verbindungsaufbaues für eine Kommunikationsverbindung bewirkt, lediglich das entsprechende, d.h. mit der entsprechenden Kennung versehene Zugriffssegment anzugeben ist.

Vorteilhaft sind die den physikalischen Ressourcen zugeordneten vermittlungstechnischen Möglichkeiten in einem Zugriffssegment durch Eintragen einer die Signalisierungsmöglichkeit angebende Signalisierungsinformation, und sofern eine Signalisierung möglich ist, einer die Signalisierungsart angebende Signalisierungsart-Information sowie einer die Anzahl von gleichzeitig möglichen Signalisierungs- und Nutzverbindungen angebende Umfangsinformation definiert - Anspruch 4. Durch diese Informationen wird der Vermittlungsprozedur-Struktur mitgeteilt, ob und über welche der zugeordneten physikalischen Ressourcen eine Kommunikationsanschlusses eine Signalisierungsprozedur abgewickelt wird - bei Wählverbindungen ist eine Signalisierungsprozedur und bei Festverbindungen keine Signalisierungsprozedur vorgesehen. Ist keine Signalisierungsprozedur vorgesehen, so ist keine Vermittlungsfunktion und damit keine Weiterverarbeitung in der Vermittlungsprozedur-Struktur erforderlich. Ist eine Signalisierungsprozedur durch einen Eintrag einer entsprechenden Information angegeben, so wird durch die Angabe der Art des Signalisierungsprotokolls - z.B. ein Teilnehmersignalisierungsprotokoll bei einem Anschluß von im Asychron-Transfer-Modus wirkenden Kommunikationseinrichtungen - in der Vermittlungsprozedur-Struktur die entsprechende Funktion aktiviert, d.h. ein dieses Signalisierungsprotokoll realisierende Vermittlungsprogramm-Struktur aktiviert. Durch die Umfanginformation wird der Vermittlungsprozedur-Struktur die Anzahl gleichzeitiger Signalisierungs- und Nutzverbindungen angezeigt, d.h. die maximale dynamische und statische vermittlungstechnische Belastung angezeigt; auf die angezeigten Belastungen sind die Vermittlungsprozedur-Struktur und die vermittlungstechnischen Ressourcen vorzubereiten. Die die vermittlungstechnischen Möglichkeiten repräsentierenden Informationen werden vorteilhaft jeweils den einen virtuellen Kanal repräsentierenden Kanalinformationen zugeordnet, wodurch der durch die Kanalinformationen bestimmte virtuelle Kanal als Signalisierungskanal bestimmt ist - Anspruch 5. Dies bedeutet, daß in diesem Signalisierungskanal nur Signalisierungsinformationen oder Signalisierungsinformationen und Nutzinformationen übertragen werden.

Gemäß einer Weiterbildung des erfindungsgemäßen Verfahrens werden in Abhängigkeit von den im Rahmen eines Verbindungsaufbaus durch den Kommunikationspartner angeforderten physikalischen Ressourcen aus dem zugeordneten Zugriffssegment die die angeforderten physikalischen Ressourcen repräsentierenden Informationen entnommen und in ein mit einer Identifikation versehenes, logisches Anschluß-Teilsegment eingetragen und dort für die Dauer der Verbindung verwaltet - Anspruch 6. Durch diese Zuordnung werden die physikalischen Ressourcen auf eine aktuelle Verbindung mit einer aktuell angeforderten Transferrate, aktuelle Anzahl von Kanälen und/oder Pfade abgestimmt. Hierbei werden Information, die für die aktuelle Verbindung erforderlichen Ressourcen repräsentieren, aus den zugeordneten Zugriffssegmenten für die Dauer einer Verbindung entnommen und stehen für andere Verbindungen, z.B. virtuelle Verbindungen, nicht mehr zur Verfügung.

Für eine physikalisch unabhängige Verbindungssteuerung in der Vermittlungsprozedur-Struktur werden in dieser mehrere logische Anschluß-Teilsegmente einem Verbindungssegment zugeordnet und für die Dauer einer Verbindung verwaltet, wobei ein Verbindungssegment die physikalischen Ressourcen für eine bidirektionale Teilverbindung bis zu einem Durchschaltepunkt repräsentiert - Anspruch 8. Dies bedeutet, daß für eine bidirektionale Verbindung zwischen zwei Kommunikationseinrichtungen zwei Verbindungssegmente gebildet und verwaltet werden, wobei durch die Vermittlungsprozedur-Struktur zwei bidirektional wirkende Verbindungssegmente vermittelt werden. Durch diese Trennung sind prozedurale Vermittlungsprogramm-Strukturen realisierbar, die weitgehend unabhängig von den physikalischen und prozeduralen Eigenschaften der Kommunikationsanschlüsse und der Kommunikationseinrichtungen bzw. der Kommunikationsendgeräte sind.

Für eine störungsfreie Anwendung des erfindungsgemäßen Verfahrens wird vorausgesetzt, daß die Zugriffssegmente in der Datenbasis nach jedem Konfigurieren des Kommunikationssystems durch betriebstechnische Meldungen eingerichtet oder aktualisiert werden, wobei die betriebstechnischen Meldungen bedienereinrichtungsgesteuert oder selbständig durch eine Zugriffssegment-Routine gebildet werden - Anspruch 10. Bei kleineren Kommunikationssystemen erscheint ein bedienereinrichtungsgesteuertes Bilden und bei größeren Kommunikationssystemen ein selbständiges durch eine Zugriffssegment-Routine gesteuertes Bilden der hierfür erforderlichen betriebstechnischen Meldungen vorteilhaft.

Weitere vorteilhafte Ausgestaltungen des erfindungsgemäßen Verfahrens, insbesondere hinsichtlich einer Realisierung in einem Kommunikationssystem, sind den weiteren Ansprüchen zu entnehmen.

Im folgenden wird das erfindungsgemäße Verfahren anhand von sechs Blockschaltbildern näher erläutert. Dabei zeigen:
- Fig. 1: die schaltungstechnische Struktur eines ATM-Kommunikationssystems,
- Fig. 2: die Vermittlungsprogramm-Struktur in einem ATM-Kommunikationssystem nach Fig. 1,
- Fig. 3: die Zuordnung der physikalischen Ressourcen zu einem einen Kommunikationspartner repräsentierenden logischen Zugriffssegment,
- Fig. 4: die Struktur eines logischen Zugriffsegmentes gemäß der Zuordnung von Fig. 3,
- Fig. 5: einen Zugriffs- und Verbindungssegmentaufbau und
- Fig. 6: eine Programmodul-Struktur für eine Verbindung zwischen zwei Kommunikationseinrichtungen.

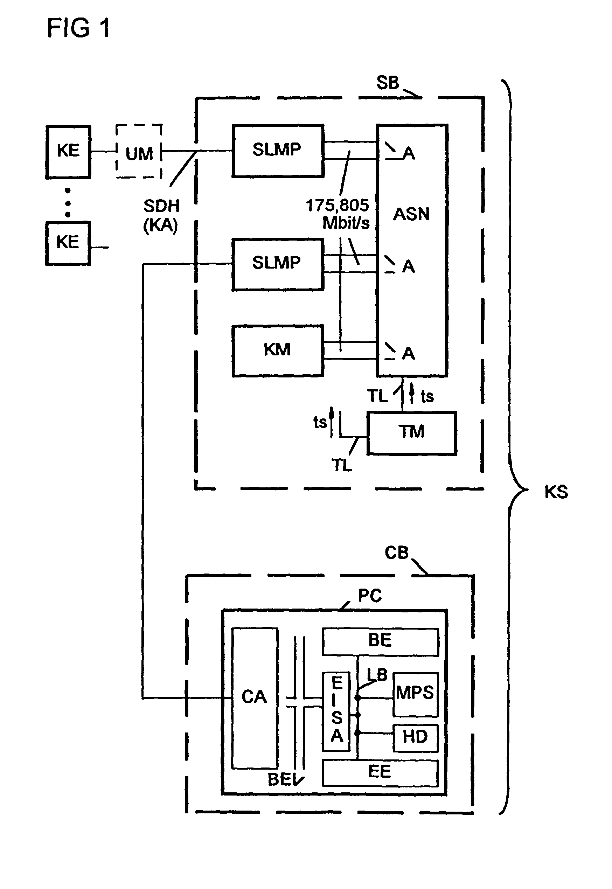

Fig. 1 zeigt ein das erfindungsgemäße Verfahren realisierendes Kommunikationssystem KS, das durch eine Vermittlungseinrichtung SB und durch eine Steuereinrichtung CB gebildet ist.

In der Vermittlungseinrichtung SB sind ein nach dem Asynchron-Transfer-Modus wirkendes ATM-Koppelfeldmodul ASN, mehrere Teilnehmeranschlußmodule SLMP, ein Kommunikationsmodul KM und ein Taktmodul TM angeordnet.

Das ATM-Koppelfeldmodul ASN ist beispielsweise mit sechzehn bidirektionalen Anschlüssen A mit einer Übertragungsgeschwindigkeit von je 175,805 Mbit/s ausgelegt. Für die Vermittlung von nach dem Asynchron-Transfer-Modus gebildeten Zellen werden diese entsprechend den mitgeführten vermittlungstechnischen Informationen über das ATM-Koppelfeldmodul ASN gemäß dem Selbstvermittlungsprinzip vermittelt. Dies bedeutet, daß Zellen mit Hilfe der mitgeführten vermittlungstechnischen Informationen - z.B. in einem vorangestellten, zusätzlichen Zellkopf - selbständig über das Koppelfeldmodul ASN vermittelt werden. An jeden der sechzehn Anschlüsse A des prozessorgesteuerten ATM-Koppelfeldmoduls ASN werden die Informationen physikalisch durch "Differential shifted ECL(Emitter Coupled Logic)-Signale, NRZ(Non Return to Zero)-codiert übertragen. Das ATM-Koppelfeldmodul ASN ist beispielsweise gemäß dem in der EP 0 329 005 B1 offenbarten Koppelfeld realisiert.

An jeden der sechzehn Anschlüsse A ist ein Teilnehmeranschlußmodul SLMP oder ein Kommunikationsmodul KM anschließbar, wobei in einer Vermittlungseinrichtung SB ein Kommunikationsmodul KM vorgesehen ist. In der Fig.1 sind beispielhaft für maximal 15 anschließbare Teilnehmeranschlußmodule SLMP zwei dargestellt.

Im Taktmodul TM werden für den Betrieb des ATM-Koppelfeldmoduls ASN, der Teilnehmeranschlußmodule SLMP und des Kommunikationsmoduls KM erforderliche Taktsignale ts gebildet und über separate Taktleitungen TL an die jeweiligen Komponenten der Vermittlungseinrichtung SB übertragen. Insbesondere sind diese Taktsignale ts für den Betrieb der in den Komponenten SLMP, ASN, KM der Vermittlungseinrichtung SB eingesetzten Mikroprozessoren und für die Übertragung der Informationen über die vermittlungseinrichtungsgemäßen Schnittstellen vorgesehen.

Für den Anschluß von nach dem Asynchron-Transfer-Modus wirkenden Kommunikationsendgeräten KE sind die Teilnehmeranschlußmodule SLMP mit einer SDH (Synchrone Digitale Hierarchie)-Schnittstelle SDH mit einer Übertragungsgeschwindigkeit von 155 Mbit/s ausgestattet. Die Daten- bzw. Informationsübermittlung über die SDH-Schnittstelle SDH wird gemäß der CCITT-Empfehlung I.121 (User Network Interface UNI) im Synchron-Transfer-Modus (STM-1) mit einer Übertragungsgeschwindigkeit von 155,52 Mbit/s durchgeführt.

Durch ein zwischen das Kommunikationsendgerät KE und das Teilnehmeranschlußmodul SLMP eingefügtes, strichliert dargestelltes Rechteck sind Übertragungsmodule UM angedeutet, mit deren Hilfe entfernte Kommunikationsendgeräte KE an die Vermittlungseinrichtung SB angeschlossen werden. Die Übertragungsmodule UM enthalten übertragungstechnische Einrichtungen - nicht dargestellt - für eine elektrische Übertragung der zellenorientierten Informationen über Koaxialkabel gemäß der CCITT-Empfehlung G.703 oder für eine optische Übertragung über Lichtwellenleiter nach den CCITT-Empfehlungen G.957/958.

Derartig breitbandige Kommunikationsendgeräte KE für den Anschluß an die Vermittlungseinrichtung SB sind durch eine Vielzahl von Einrichtungen realisierbar. Beispielhaft sind Anschlüsse an weitere ATM-Kommunikationssysteme KS, Adapter für den Anschluß von lokalen Netzen, ISDN-Vermittlungseinrichtungen - z.B. an das HICOM-Vermittlungssystem - und ATM-Workstations erwähnt.

Mit Hilfe des Kommunikationsmoduls KM werden die von der Steuereinrichtung CB oder an diese zu übermittelnde Zellen gesteuert. Hierzu ist im Kommunikationsmodul KM eine Schicht 2 - Funktion entsprechend dem ISO - Schichtenmodell und eine für die Vermittlung der Zellen innerhalb der Vermittlungseinrichtung SB vorgesehene Schicht 3- Funktion realisiert. Des weiteren umfaßt das Kommunikationsmodul KM eine vermittlungstechnische Subfunktion, mit deren Hilfe von der Steuereinrichtung CB und umgekehrt übermittelte vermittlungstechnische, administrative und betriebstechnische Meldungen mit Hilfe des erfindungsgemäßen Verfahrens in vermittlungseinrichtungskonforme Meldungen, d.h. auf die physikalische Ausgestaltung der Vermittlungseinrichtung SB bezogen, transformiert werden.

Für die Kommunikation der Vermittlungseinrichtung SB mit der Steuereinrichtung CB ist diese mit einem Kommunikationsadapter CA ausgestattet. Der Kommunikationsadapter CA ist in einem die Steuereinrichtung CB realisierenden Personalcomputer PC angeordnet. Der durch einen handelsüblichen Personalcomputer realisierte Personalcomputer PC weist bekannterweise eine Bildschirmeinrichtung BE, eine Eingabeeinrichtung EE, Massenspeichereinrichtungen HD - z.B. Hard Disks - und ein Mikroprozessorsystem MPS auf. Zusätzlich ist ein einen EISA-Bus BEI realisierendes Adaptionsmodul EISA im Personalcomputer PC integriert, wobei der Kommunikationsadapter CA an den EISA-Bus BEI angeschlossen ist. Die Komponenten BE, EE, MPS, HD, EISA des Personalcomputers PC kommunizieren über einen internen lokalen Bus LB. Beim EISA-Bus handelt es sich um einen vom internen, lokalen Bus LB entkoppelten Bus mit einer Bitbreite von 32 Bit und einer Transferrate von 33 Mbyte/s.

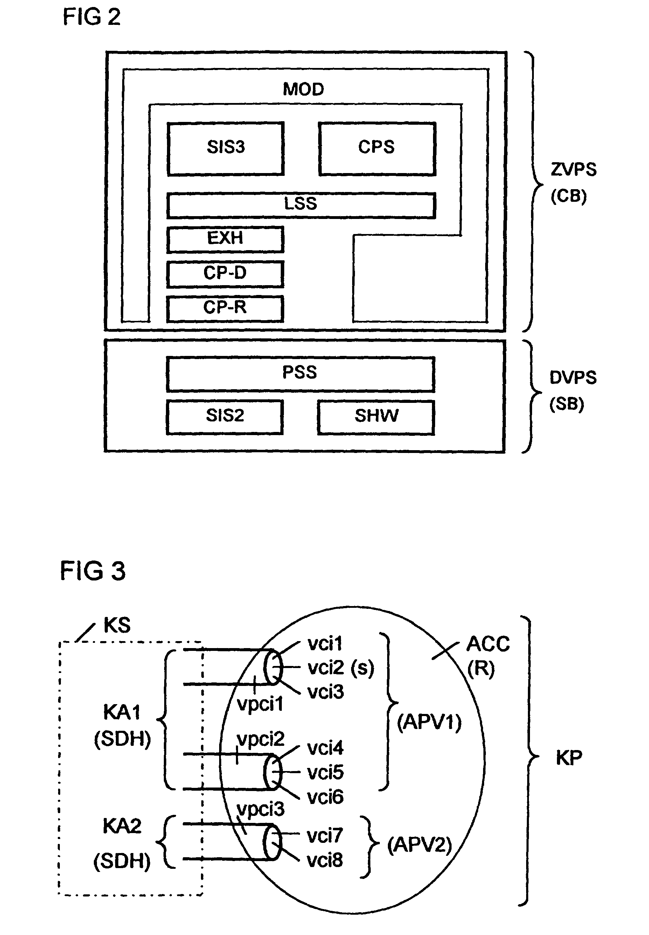

Fig. 2 zeigt eine in dem Kommunikationssystem KS nach Fig. 1 realisierte Vermittlungsprozedur-Struktur VPS bzw. eine Vermittlungsprogramm-Struktur VPS, die in eine in der Steuereinrichtung CB implementierte zentrale Vermittlungsprogramm-Struktur ZVPS und in eine in der Vermittlungseinrichtung SB implementierte dezentrale Vermittlungsprogramm-Struktur DVPS unterteilt ist. Die zentrale Vermittlungsprogramm-Struktur ZVPS ist im Programmspeicher des die Steuereinrichtung repräsentierenden Personalcomputers PC und die dezentrale Vermittlungsprogramm-Struktur DVPS im wesentlichen im Programmspeicher des in der Vermittlungseinrichtung SB angeordneten Kommunikationsmoduls KM gespeichert.

Die zentrale Vermittlungsprogramm-Struktur ZVPS ist durch ein Monitor-Programmodul MOD, ein Signalisierungs-Subprogrammodul SIS3, ein Vermittlungs-Subprogrammodul CPS, ein logisches Vermittlungs-Subprogrammodul LSS, ein Vermittlungsdaten-Programmodul CP-D, ein Vermittlungsressourcen-Programmodul CP-R und ein Fehler-Programmodul EXH gebildet. In der dezentralen Vermittlungsprogramm-Struktur DVPS ist ein physikalisches Vermittlungs-Subprogrammodul PSS, ein weiteres Signalisierungs-Subprogrammodul SIS2 und ein Hardware-Programmodul SHW vorgesehen.

Mit Hilfe des Monitor-Programmoduls MOD werden die externen Softwareschnittstellen der zentralen Vermittlungsprogramm-Struktur ZVPS zu beispielsweise nicht dargestellten Betriebs- und Sicherheitstechnik-Programmstrukturen realisiert. Hierbei handelt es sich um meldungsorientierte Schnittstellen.

Im Signalisierungs-Subprogrammodul SIS3 ist eine Transportsteuerungs- und eine Schicht-3-Funktion enthalten. Hierbei werden die Schicht-2-Verbindungen - Schicht 2 stellt im ISO 7-Schichten-Modell die verbindungsorientierte Sicherungsschicht (z.B. HDLC-Verbindungen) dar - durch die Transportsteuerungsfunktion gesteuert. Der Transportsteuerungsfunktion sind folgende Aufgaben zugeordnet:
- Bearbeiten von Anreizen zum Auf- und Abbau von Schicht-2-Verbindungen, die für den Transport von Schicht-3-Meldungen erforderlich sind.
- Multiplexen von mehreren vermittlungstechnischen Verbindungen in einer Schicht-2-Verbindung und deren Verwaltung.
- Übergabe der Informationen von der Sicherungsschicht (Schicht 2) zur Vermittlungsschicht (Schicht 3) und umgekehrt.
- Bearbeiten von Fehlermeldungen innerhalb der Sicherungsschicht.

Die Schicht-3-Funktion repräsentiert die vermittlungstechnische Schicht, wobei in dieser ein Protokoll-Programmodul implementiert ist, das ein ATM-Signalisierungsprotokoll gemäß dem Standard "UNI Specification Draft 3.1" des ATM-Forums von 1993 realisiert. Dieses Protokoll-Programmodul stellt die Schnittstelle zwischen den vermittlungstechnischen Programmodulen und der Sicherungsschicht dar, wobei die zu übermittelnden Informationen und die Zustandssteuerung gemäß dem ATM-Signalisierungsprotokoll bearbeitet werden. Das Signalisierungs-Programmodul ist in zwei Protokollvarianten realisierbar. Bei einer Protokollvariante ist die Steuereinrichtung CB als Steuereinrichtung CB des Kommunikationssystems KS und bei der anderen Protokollvariante als Kommunikationsendgerät einsetzbar.

Im Vermittlungs-Subprogrammodul CPS ist für jede an einer Verbindung beteiligten Komponente des ATM-Kommunikationssystems KS ein entsprechendes Abbild verfügbar. Die Komponenten sind der Kommunikationspartner, das Gerät und das erfindungsgemäße Zugriffsegment.

Der Kommunikationspartner oder auch Teilnehmer steuert mit seinen innerhalb einer Signalisierungsprozedur übermittelten Informationen den Verbindungsauf- und -abbau sowie die Anforderung von Leistungsmerkmalen. Seine Signalisierungs- bzw. Wählnummer und seine Berechtigungen zu Diensten, Leistungsmerkmalen usw. repräsentieren den Benutzer und diese Parameter sind im Vermittlungs-Subprogrammodul CPS in einem Benutzersegment für die Dauer einer Verbindung abgebildet, d.h. aus einem Segment einer Datenbasis gelesen und in dem Benutzersegment gespeichert.

Das Gerät stellt diejenige Einrichtung dar, über die ein Kommunikationspartner mit dem Kommunikationssystem KS kommuniziert. Eine derartige Einrichtung kann durch ein Kommunikationsendgerät, eine Übergangseinrichtung zu anderen Netzen, z.B. zu lokalen Netzen oder ein anderes Kommunikationssystem, z.B. eine weiteres ATM-Kommunikationssystem oder ein ISDN-Kommunikationssystem, repräsentiert sein. Die für die Beschreibung erforderlichen Parameter werden für die Dauer einer Verbindung in einem Gerätesegment abgebildet.

Im Fehler-Programmodul EXH werden die in der zentralen Vermittlungsprogramm-Struktur CPS auftretenden Fehlermeldungen gesammelt und über das Monitor-Programmodul MOD an nicht dargestellte, sicherheitstechnische Programmstrukturen übermittelt

Fig. 3 zeigt das durch strichpunktierte Linien angedeutete Kommunikationssystem KS gemäß Fig. 1. Für das Ausführungsbeispiel sei angenommen, daß einem Kommunikationspartner KP zwei Kommunikationsanschlüsse KA1,2 zugeordnet sind, wobei der Kommunikationspartner KP beispielsweise durch ein nicht dargestelltes, weiteres ATM-Kommunikationssystem realisiert ist. Die Kommunikationsanschlüsse KA1,2 entsprechen jeweils den in Fig. 1 erläuterten SDH-Schnittstellen SDH mit einer Übertragungsgeschwindigkeit von je 155,52 Mbit/s. Erfindungsgemäß wird jedem, im Ausführungsbeispiel dem dargestellten Kommunikationspartner KP, ein logisches Zugriffsegment ACC zugeordnet, in das die physikalischen Ressourcen R des Kommunikationspartners KP eingetragen und verwaltet werden. Des weiteren ist in dem logischen Zugriffsegment ACC für jeden einem Kommunikationspartner KP zugeordneten Kommunikationsanschluß KA eine Anschlußübersicht APV, bezogen auf das Ausführungsbeispiel zwei Anschlußübersichten APV1,2, zugeordnet. Jede der Anschlußübersichten APV1,2 ist beispielsweise durch eine Tabelle realisiert, in die ATM-kommunikationsanschlußbezogenen Informationen über die physikalischen Ressourcen R eingetragen werden.

Beim Ausführungsbeispiel sind der ersten Anschlußübersicht APV1 zwei Verbindungspfadinformationen vpci1,2 und der zweiten Anschlußübersicht APV2 eine dritte Verbindungspfadinformation vpci3 zugeordnet. Durch diese Verbindungspfadinformationen vpci1..3 sind gemäß ATM-Anschlußtechnik definierbare Verbindungspfade - nicht dargestellt- repräsentiert, in denen jeweils ein oder mehrere virtuelle Kanäle - ebenfalls nicht dargestellt - zusammengefaßt sind. Die einem virtuellen Pfad zugeordneten virtuellen Kanäle sind im logischen Zugriffssegment ACC durch Kanalinformationen vci angegeben. Auf das Ausführungsbeispiel bezogen sind der ersten Verbindungspfadinformation vpci1 drei Kanalinformationen vci1..3, der zweiten Verbindungspfadinformation vpci2 ebenfalls drei Kanalinformation vci4..6 und der dritten Verbindungspfadinformation vpci zwei Kanalinformationen vci7,8 zugeordnet, wobei jede Kanalinformation vci1..8 einen virtuellen Kanal in dem jeweiligen virtuellen Pfad repräsentiert. Erfindungsgemäß können in Abhängigkeit von der einem Kommunikationspartner KP zugeordneten physikalischen Ressourcen R eine oder mehrere Anschlußübersichten APV für ein logisches Zugriffssegmet (ACC) vorgesehen und diesen unterschiedliche Anzahlen von Verbindungspfad- und Kanalinformationen vpci, vci zugeordnet werden.

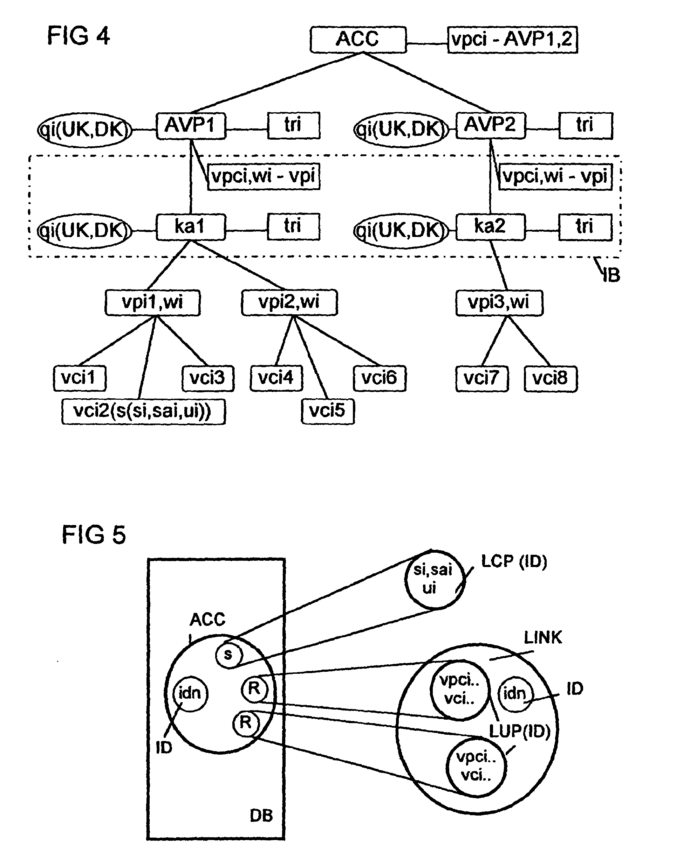

Beispielhaft ist der zweiten Kanalinformation vci eine die vermittlungstechnische Möglichkeit anzeigende Information s zugeordnet. Diese Information s ist durch eine die Signalisierungsart anzeigende Signalisierungsartinformation sai und durch eine die Anzahl gleichzeitiger Signalisierungs- und Nutzverbindung anzeigende Umfangsinformation ui gebildet - siehe Fig. 4. Durch die Signalisierungartinformation sai wird die Art der Signalisierung, z.B. ATM-Teilnehmersignalisierung im Wählbetrieb, angezeigt. Im Kommunikationssystem KS ist, um die angezeigte Signalisierung mit den Kommunikationspartnern KP bzw. deren Kommunikationsendgeräte zu bewirken, eine entsprechende Prozedur bzw. ein entsprechendes Signalisierungsprogramm zu implementieren. Durch die Anzahl der maximalen gleichzeitigen Signalisierungs- bzw. Nutzsignalverbindungen wird dem Kommunikationssystem KS die maximale dynamische und statische Belastung angezeigt. Das Kommunikationssystem KS stellt entsprechend der angezeigten Umfanginformationen ui die dynamischen - Prozessorleistung - und statischen Belastung - vermittlungstechnische Ressourcen - bereit, sofern der Kommunikationspartner KP diese bei einem Verbindungsaufbau beantragt.

In Fig. 4 ist anhand eines Objekt-Modells die Struktur des in Fig. 3 dargestellten logischen Zugriffssegmentes ACC dargestellt. Die Zuordnungen und die Funktionen der dargestellten Informationen vpci, vci, s, sai, ui sind in den Ausführungen zu Fig. 3 bereits erläutert. Den virtuellen Verbindungspfadinformationen vpci sind jeweils Werteinformationen wi zugeordnet. Durch diese Werteinformationen wi sind die den Verbindungspfad- und Kanalinformationen vpci, ki zugeordneten Wertebereiche, insbesondere numerische Wertebereiche angedeutet. Zusätzlich sind in Fig. 4 den Anschlußübersichten APV1,2 Qualitätsinformationen qi sowie Transferinformationen tri zugeordnet. Die Qualitätsinformationen qi sind beispielsweise durch eine Übertragungs- oder Dienstklasse UK, DK repräsentiert, wobei durch die Dienst- oder Übertragungsklasse UK, DK die Qualität des entsprechenden Dienstes oder der Übertragung - die z.B. eine maximal zulässige Bit- oder Paketfehlerrate beinhaltet - angegeben wird. Die Transferinformation tri gibt die maximal zulässige Zellentransfergeschwindigkeit an, mit der ein Kommunikationspartner KP Zellen, d.h. Pakete definierter Länge, über den jeweiligen Kommunikationsanschluß KA übermitteln darf. Die Angabe erfolgt beispielsweise in Zellen pro Sekunde. Des weiteren ist jeder Anschlußübersicht APV1,2 eine Tabelle zugeordnet, in der die Umwertung der Verbindungspfadinformation vpci in Pfadinformationen vpi erfolgt. Diese Umwertung ist erforderlich, da die Verbindungspfadinformation vpci bei einem Verbindungsaufbau in einem nachgehend erläuterten Segment als logische Information verwendet wird und die Pfadinformation vpi sich auf den physikalischen, virtuellen Pfad eines ATM-Kommunikationsanschlusses KA bezieht. Die Verbindungspfadinformation vpci wird vorteilhaft auf die logische Verarbeitung in der Vermittlungsprozedur abgestimmt. Analog hierzu ist im logischen Zugriffssegment ACC eine Tabelle vorgesehen, mit deren Hilfe die Zuordnung der Verbindungspfadinformation vpci zur Anschlußübersicht APV1,2 angegeben ist. Durch diese Zuordnung ist eine gezielte Abfrage der physikalischen Ressourcen R in einem virtuellen Pfad eines Kommunikationsanschlusses KA möglich.

Durch die kommunikationsanschlußbezogenen Informationen ka1, ka2 wird die Zuordnung der Anschlußübersicht AVP1,2 zu den Kommunikationsanschlüssen KA angegeben. Diese Zuordnung sowie die hierzu nochmals zugeordneten Güte- und Transferinformationen qi, tri werden beim Einrichten eines logischen Segmentes angegeben und im Rahmen einer weiteren Verbindungssteuerung jedoch nicht mehr berücksichtigt. Ebenfalls nicht mehr berücksichtigt wird die Zuordnung der Verbindungspfadinformation vpci zur Pfadinformation vpi. Somit präsentiert sich das logische Zugriffssegment ACC während des Betriebes, d.h. im Rahmen einer Verbindungssteuerung, ohne die durch strichlierten Linien umfaßten Informationen bzw. Tabellen.

Beim Ausführungsbeispiel sind der den ersten Kommunikationsanschluß KA1 repräsentierenden Information ka1 eine erste und zweite Pfadinformation vpi1,2 und der den zweiten Kommunikationsanschluß KA2 repräsentierenden Information ka2 eine dritte Pfadinformation vpi3 zugeordnet. Entsprechend Fig. 3 ist der ersten Pfadinformation vpi1 eine erste, zweite und dritte Kanalinformation vci1, vci2, vci3, der zweiten Pfadinformation vpi2 eine vierte, fünfte und sechste Kanalinformation vci4, vci5, vci6 und der dritten Pfadinformation vpi3 eine siebte und achte Kanalinformation vci7, vci8 zugeordnet.

Zur Identifikation eines logischen Zugriffssegmentes ACC bei der Einbindung in eine Verbindungssteuerung bzw. in die vermittlungstechnischen Abläufe wird in das Zugriffssegment ACC eine Identifikation ID, z.B. eine Identifikationsnummer idn eingetragen.

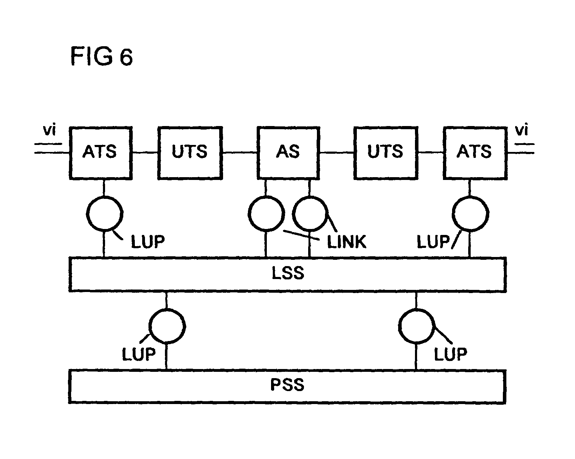

In einem in Fig. 5 dargestellten erfindungsgemäßen Zugriffssegment ACC sind, wie in Fig.3 und Fig. 4 erläutert, durch betriebstechnische Meldungen durch in Anschlußübersichten APV1,2 eingetragene Verbindungspfad- sowie Kanalinformationen vpi.., vci.. einschließlich der Werteinformationen wi, Transfer- und Qualitätsinformationen tri, qi repräsentiert und in Fig.5 allgemein durch mit R bezeichnete Kreise angedeutet. Die vermittlungstechnischen Möglichkeiten s - insbesondere hinsichtlich der Signalisierungsprozuduren in den logischen Kanälen - sind durch einen mit s bezeichneten Kreis angedeutet.. In Abhängigkeit von den im Rahmen eines Verbindungsaufbaus durch die von einer Kommunikationseinrichtung KE des Kommunikationspartners KP übermittelten Anforderungen hinsichtlich Transferrate und Anzahl von virtuellen Kanälen und Pfaden für eine gewünschte Verbindung werden die angeforderten vermittlungstechnischen Ressourcen R entnommen und für die Dauer einer Verbindung einem Anschluß-Teilsegment LUP zugeordnet - in Fig.5 durch mit LUP bezeichnete Kreise mit den Einfügungen vpci.., vci.. angedeutet. Analog hierzu werden die vermittlungstechnischen Möglichkeiten s des zugeordneten Zugriffssegmentes ACC im Rahmen eines Verbindungsaufbaus für die Dauer einer Verbindung einem logischen Signalisierungs-Teilsegment LCP zugeordnet - in Fig.5 durch einen mit LCP bezeichneten Kreis mit den Einfügungen sai, ui angedeutet. Für eine ressourcenunabhängige Realisierung eines Vermittlungs-Subprogrammoduls CPS sind für die Dauer einer Verbindung mehrere logische Anschluß-Teilsegmente LUP einem Verbindungssegment LINK zugeordnet.

Bei einem Verbindungsaufbau werden entsprechend der von einem Kommunikationspartner KP übermittelten vermittlungstechnischen Informationen - üblicherweise Ursprungs- und Zieladresse oder die Portnummer - sowie entsprechend der teilweise oder vollständig angeforderten physikalischen Ressourcen R - z.B. Transferrate und Anzahl von virtuellen Kanälen und Pfaden - aus dem dem jeweiligen Kommunikationspartner KP zugeordneten Zugriffssegment ACC die die angeforderten physikalischen Ressourcen R repräsentierenden Informationen vpci.., vci.. entnommen und einem oder mehreren logischen Anschluß-Teilsegmenten LUP für die Dauer einer Kommunikationsbeziehung bzw. einer Verbindung - einer Fest- oder Wählverbindung - zugeordnet. Hierbei werden die logischen Anschluß-Teilsegmente LUP zu mit einer Identifikation ID - z.B. eine Identifikationsinformation idn - versehenen Verbindungssegmenten LINK zusammengefaßt - siehe Fig. 5. Ein Verbindungssegment LINK einschließlich einer Identifikation ID repräsentiert somit logisch die Gesamtheit der während eines Verbindungsaufbaus durch einen Kommunikationspartner KP angeforderten physikalischen, kommunikationsanschlußbezogenen Eigenschaften bzw. Ressourcen. Aus diesem für die Dauer einer Verbindung zugeordnetem Verbindungssegment LINK entnimmt die Verbindungssteuerung die die physikalischen Ressourcen R eines Kommunikationspartners KD betreffenden Informationen oder speichert in diesem derartige Informationen ab.

Des weiteren werden bei einem Verbindungsaufbau aus dem einbezogenen Zugriffselement ACC die die vermittlungstechnischen Möglichkeiten s repräsentierenden Informationen sai, ui betreffend der Signalisierung entnommen und für die Dauer einer Verbindung einem logischen Signalisierungs-Teilsegment LCP zugeordnet. Die Zuordnung in ein logisches Anschluß-Teilsegment LUP wird im physikalischen Vermittlungs-Subprogrammodul PSS und die Zuordnung zu Verbindungsegmenten LINK im logischen Vermittlungs-Subprogrammodul LSS durchgeführt.

In Fig. 6 ist eine im Vermittlungs-Subprogrammoduls CPS implementierte Programmodul-Struktur für eine Verbindung zwischen zwei Kommunikationspartnern KP bzw. deren Kommunikationsendgeräten KE dargestellt. Hierbei führen Zugriffs-Programmodule ATS, basierend auf den in den logischen Anschluß-Teilsegmenten LUP enthaltenen, die physikalischen Ressourcen R repräsentierenden Informationen vpci.., vci.., alle Funktionen aus, die beim Auf- und Abbau bzw. bei Änderungen von Verbindungen bezüglich der Parameter einer Verbindung - z.B. virtuelle Kanal- und Pfadnummer sowie die maximale Zellenübermittlungsrate - durch das Kommunikationssystem KS zu berücksichtigen sind. Eine neue Verbindung kann nur angenommen werden, wenn genügend vermittlungstechnische Ressourcen verfügbar sind - insbesondere am Kommunikationsanschluß SDH und im ATM-Koppelfeldmodul ASN. Diese Überprüfung wird zusammen mit dem Vermittlungsressourcen-Programmodul CP-R durchgeführt.

Ein Benutzer-Programmodul UTS repräsentiert innerhalb des Vermittlungs-Subprogrammoduls CPS den Kommunikationspartner KP bzw. den Teilnehmer mit seinen Eigenschaften und Berechtigungen. Der Benutzer wird durch seine Wählnummer bzw. Teilnehmernummer identifiziert.

Das Verbindungs-Programmodul AS ist verantwortlich für das Durchschalten und Auslösen einer Verbindung zwischen zwei Kommunikationspartnern KP bzw. Teilnehmern. Zu diesem Zweck bedient sich das Verbindungs-Programmodul AS der Benutzer- und Zugriffs-Programmodule ATS, UTS für die rufende und für die gerufene Seite. Durch die vier Programmodule ATS, UTS wird das Verbindungs-Programmodul AS über den jeweiligen Stand des Verbindungsaufbaus von beiden Seiten informiert und anschließend wird zum richtigen Zeitpunkt das Durchschalten bzw. das Auslösen der bidirektionale Verbindung ausgeführt.

Im in Fig. 2 dargestellten logischen Vermittlungs-Subprogrammodul LSS werden die physikalischen Ressourcen bzw. Eigenschaften der ATM-Nutzkanäle - nicht der Signalisierungskanäle - zu logischen Anschlußpunkten, in den für die Dauer einer Verbindung gebildeten Verbindungssegmenten LINK abstrahiert. Mit den vom logischen Vermittlungs-Subprogrammodul LSS verwalteten Verbindungssegmenten LINK kann das Vermittlungs-Subprogrammodul CPS unabhängig von den in den Verbindungssegmenten LINK definierten physikalischen Eigenschaften die vermittlungstechnischen Funktionen realisieren - in Fig.6 durch Kreise zwischen dem logischen Vermittlungs-Subprogrammmodul LSS und den Benutzer-Programmodulen ATS sowie dem Verbindungs-Programmodul AS angedeutet. Das Vermittlungs-Subprogrammodul LSS dient im wesentlichen der Entkopplung der prozeduralen von der schaltungstechnischen Vermittlungsfunktion.

Der vermittlungstechnische Meldungsverkehr zwischen der Steuer- und der Vermittlungseinrichtung SB, CB wird überwiegend durch in Meldungen eingefügte Anschluß-Teilsegmente LUP bewerkstelligt - in Fig. 6 durch die entsprechenden Kreise zwischen dem logischen und der physikalischen Vermittlungs-Subprogrammodul LSS, PSS angedeutet.

In der zentralen Vermittlungsprogramm-Struktur ZVPS werden die erforderlichen Daten in persistenten, statischen und dynamischen Objekten gehalten. Daten der persistenten Objekte sind Daten, die aufgrund betriebstechnischer Meldungen im Kommunikationssystem KS abgelegt werden und auf jeden Fall über einen Restart hinweg erhalten werden müssen. Dies sind insbesondere Daten, die in den Zugriffs- und Benutzersegmenten ACC einschließlich zugehöriger Daten wie Identifikationsinformationen idn gespeichert werden. Daten der statischen Objekte stellen Daten dar, die nach einem Neu- oder Restart des Kommunikationssystem KS aus den persistenten Daten abgeleitet werden. Dies sind beispielsweise Daten über den aktuellen Stand verfügbarer vermittlungstechnischer Ressourcen sowie über Zugriffssegmente ACC und deren Eigenschaften. Die dynamischen Daten enthalten Informationen über verbindungs-programmodul-bezogene Ressourcen R, Zustände und Verknüpfungsinformationen.

Mit Hilfe des in der Vermittlungseinrichtung SB implementierten physikalischen Vermittlungs-Subprogrammoduls PSS werden die von der Steuereinrichtung CB übermittelten vermittlungstechnischen Meldungen in hardwarenahe vermittlungstechnische Meldungen umgewertet und an die entsprechenden Komponenten der Vermittlungseinrichtung SB übermittelt. Hierbei wird dem physikalischen Vermittlungs-Subprogrammodul PSS vom logischen Vermittlungs-Subprogrammodul LSS lediglich durch Übermitteln von logischen Anschluß-Teilsegmenten LUP mitgeteilt, beispielsweise welcher Anschluß des ATM-Koppelfeldmoduls ASN mit welchem zu verbinden ist. Welcher physikalische Weg durch das ATM-Koppelfeldmodul ASN gewählt wird, wird durch das physikalische Vermittlungs-Subprogrammodul PSS verwaltet - einschließlich der ATM-Koppelfeldmodul-internen Ressourcen. Hierdurch ist die prozedurale Vermittlungstechnik annähernd unabhängig von den physikalischen Eigenschaften der Kommunikationsanschlüsse und kann daher separat für unterschiedlichste physikalische Ausprägungen des Kommunikationssystems KS eingesetzt werden. Des weiteren wird hierdurch eine weitgehend hardware-unabhängige Entwicklung und Pflege von Vermittlungstechnischen Programmen ermöglicht.

Das erfindungsgemäße Verfahren ist besonders vorteilhaft nicht nur in ATM-Kommunikationssystemen KS sondern auch in ISDN-Kommunikationssystemen mit einer "Schmalband-Vermittlungsprozedur-Struktur" - z.B. 64 oder n x 64 Kbit/s einsetzbar. Hierbei ist eine Anschlußübersicht APV beispielsweise einem eine SO-ISDN-Schnittstelle realisierenden ISDN-Kommunikationsanschluß eines ISDN-Kommunikationssystems zugeordnet.

## Patentansprüche

1. Verfahren zur Realisierung einer von der Ausprägung der physikalischen Ressourcen eines an ein Kommunikationssystem (KS) angeschlossenen Kommunikationspartners (KP) unabhängigen Vermittlungsprozedur-Struktur (VPS), wobei mit Hilfe der Vermittlungsprozedur-Struktur (VPS) eine Verbindungssteuerung zwischen mindestens zwei Kommunikationspartnern (KP), denen jeweils zumindest ein Teil der physikalischen Ressourcen (R) zumindest eines Kommunikationsanschlusses (A) zugeordnet ist, bewirkt wird,
- bei dem in der Datenbasis (DB) des Kommunikationssystems (KS) für jeden Kommunikationspartner (KP) ein logisches Zugriffssegment (ACC) eingerichtet und verwaltet wird,
- wobei jedes logische Zugriffssegment (ACC)
-- eine den jeweiligen Kommunikationspartner (KP) identifizierende Identifikation (ID) und zumindest eine jeweils auf einen Kommunikationsanschluß (KA) bezogenen Anschlußübersicht (APV1,2) aufweist,
-- und in eine Anschlußübersicht (APV1,2)
--- die physikalischen Ressourcen (R) des dem jeweiligen Kommunikationspartner (KP) zugeordneten Kommunikationsanschlusses (KA) anzeigenden Ressourceninformationen (vpci, vci, tri, wi, qi) sowie
--- deren vermittlungstechnischen Möglichkeit (s) anzeigende Vermittlungsinformationen (sai, ui)
eingetragen werden.

2. Verfahren nach Anspruch 1,
**dadurch gekennzeichnet,**
**daß** die logischen Zugriffssegmente (ACC) in der Datenbasis (DB) von im Asychron-Transfer-Modus wirkenden ATM-Kommunikationssystemen (KS) eingerichtet und verwaltet werden.

3. Verfahren nach Anspruch 1 oder 2,
**dadurch gekennzeichnet,**
**daß** bei nach dem Asynchron-Transfer-Modus wirkenden Kommunikationssystemen (KS) die Ressourceninformation (vpci, vci, tri, wi, qi) durch
- eine die Anzahl virtueller Verbindungspfade anzeigende Verbindungspfadinformation (vpci) sowie eine die Anzahl virtueller Kanäle in einem virtuellen Verbindungspfad anzeigende Kanalinformation (vci),
- eine den Wertebereich der virtuellen Verbindungspfade und Kanäle angebende Werteinformationen (wi),
- eine die maximale Transfergeschwindigkeit für den jeweiligen Kommunikationsanschluß (KA) anzeigende Transferinformation (tri),
- eine die Zuordnung der virtuellen Pfadinformationen (vpi) zu den virtuellen Verbindungspfadinformationen (vpci) angebende Tabelle und
- eine die Übertragungs- (UK) oder Dienstklasse (DK) anzeigende Qualitätsinformation (qi)
repräsentiert sind.

4. Verfahren nach einem der Ansprüche 1 bis 3,
**dadurch gekennzeichnet,**
**daß** die den physikalischen Ressourcen (R) zugeordneten vermittlungstechnischen Möglichkeiten (s) in einem logischen Zugriffssegment (ACC) durch Eintragen
- einer die Signalisierungsmöglichkeit angebende Signalisierungsinformation (s), und sofern eine Signalisierung möglich ist,
- einer die Signalisierungsart angebende Signalisierungsart-Information (sai) sowie
- einer die Anzahl von gleichzeitig möglichen Signalisierungs- und Nutzverbindungen angebende Umfangsinformation (ui)
definiert sind.

5. Verfahren nach Anspruch 4,
**dadurch gekennzeichnet,**
**daß** die die vermittlungstechnischen Möglichkeiten repräsentierenden Informationen (si, sai, ui) jeweils den einen virtuellen Kanal repräsentierenden Kanalinformationen (vci) zugeordnet ist, wodurch der durch die Kanalinformationen (vci) bestimmte virtuelle Kanal als Signalisierungskanal bestimmt ist.

6. Verfahren nach einem der Ansprüche 1 bis 5,
**dadurch gekennzeichnet,**
**daß** in Abhängigkeit von den im Rahmen eines Verbindungsaufbaus durch den Kommunikationspartner (KP) angeforderten physikalischen Ressourcen (R) aus dem zugeordneten Zugriffssegment (ACC) die die angeforderten physikalischen Ressourcen (R) repräsentierenden Informationen (vpci, vci) entnommen und in ein mit einer Identifikation (ID) versehenes, logisches Anschluß-Teilsegment (LUP) eingetragen und dort für die Dauer der Verbindung verwaltet werden.

7. Verfahren nach einem der Ansprüche 1 bis 6,
**dadurch gekennzeichnet,**
**daß** im Rahmen eines Verbindungsaufbaus für einen Kommunikationspartner (KP) aus dem zugeordneten logischen Zugriffssegment (ACC) die die vermittlungstechnischen Möglichkeiten (s) repräsentierenden Informationen (si, sai, ui), die den die angeforderten physikalischen Ressourcen (R) repräsentierenden Informationen (vpci, vci..) zugeordnet sind, entnommen und in ein mit einer Identifikation (ID) versehenes, logisches Signalisierungs-Teilsegment (LCP) eingetragen und dort für die Dauer einer Verbindung verwaltet werden.

8. Verfahren nach Anspruch 6,
**dadurch gekennzeichnet,**
**daß** für eine physikalisch unabhängige Verbindungssteuerung in der Vermittlungsprozedur-Struktur (VPS) in dieser mehrere logische Anschluß-Teilsegmente (LUP) einem Verbindungssegment (LINK) zugeordnet und für die Dauer einer Verbindung verwaltet werden, wobei ein Verbindungssegment (LINK) die physikalischen Ressourcen (R) für eine bidirektionale Teilverbindung bis zu einem Durchschaltepunkt repräsentiert.

9. Verfahren nach den Ansprüchen 6 bis 8,
**dadurch gekennzeichnet,**
**daß** innerhalb der Vermittlungsprozedur-Stuktur (VPS)
- in einem Vermittlungs-Subprogrammodul (CPS) auf der Basis der gebildeten Verbindungsegmente (LINK) die Vermittlungswege ermittelt und die vermittlungstechnischen Einstellinformationen durch die Angabe der zu verbindenden Verbindungsegmente (LINK) gebildet werden,
- in einem logischen Vermittlungs-Subprogrammodul (LSS) die Verbindungssegmente (LINK) gebildet und verwaltet werden, und von dem und an das Anschluß-Teilsegmente (LUP) sowie vermittlungstechnische Meldungen an ein und von einem physikalischen Vermittlungs-Subprogrammodul (PSS) übermittelt werden, und
- in dem physikalischen Vermittlungs-Subprogrammodul (PSS) die Anschluß-Teilsegmente (LUP) mit Hilfe der Zugriffssegmente (ACC) gebildet und verwaltet werden und entsprechend der vermittlungstechnischen Meldungen mit Hilfe der Zugriffssegmente (ACC) die physikalische Durchschaltung bewirkende Einstellinformationen gebildet werden.

10. Verfahren nach einem der vorhergehenden Ansprüche,
**dadurch gekennzeichnet,**
**daß** die Zugriffssegmente (ACC) in der Datenbasis (DB) nach jedem Konfigurieren des Kommunikationssystem (KS) durch betriebstechnische Meldungen eingerichtet oder aktualisiert werden, wobei die betriebstechnischen Meldungen bedienereinrichtungsgesteuert oder selbständig durch eine Zugriffssegment-Routine gebildet werden.

## Claims

1. Method for implementing a switching procedure structure (VPS) which is independent of the embodiment of the physical resources of a communication partner (KP) connected to a communication system (KS), a connection control between at least two communication partners (KP), to each of which at least some of the physical resources (R) of at least one communication port (A) are assigned, being effected with the aid of the switching procedure structure (VPS),
- wherein a logical access segment (ACC) is set up and managed in the database (DB) of the communication system (KS) for each communication partner (KP),
- with each logical access segment (ACC)
-- having an identification (ID) identifying the respective communication partner (KP) and at least one port overview (APV1,2) each relating to a communication port (KA),
-- and in a port overview (APV1,2) there is entered
--- resource information (vpci, vci, tri, wi, qi) indicating the physical resources (R) of the communication port (KA) assigned to the respective communication partner (KP) and
--- switching information (sai, ui) indicating a switching-related option (s) thereof.

2. Method according to claim 1,
**characterised in that**
the logical access segments (ACC) are set up and managed in the database (DB) by ATM communication systems (KS) operating in the asynchronous transfer mode.

3. Method according to claim 1 or 2,
**characterised in that**
in communication systems (KS) operating in accordance with the asynchronous transfer mode, the resource information (vpci, vci, tri, wi, qi) is represented by
- connection path information (vpci) indicating the number of virtual connection paths as well as channel information (vci) indicating the number of virtual channels in a virtual connection path,
- value information (wi) indicating the value range of the virtual connection paths and channels
- transfer information (tri) indicating the maximum transfer rate for the respective communication port (KA),
- a table specifying the assignment of the virtual path information (vpi) to the virtual connection path information (vpci) and
- quality information (qi) indicating the transmission class (UK) or service class (DK).

4. Method according to one of claims 1 to 3,
**characterised in that**
the switching-related options (s) assigned to the physical resources (R) are defined in a logical access segment (ACC) by entering
- signalling information (s) specifying the signalling option and, insofar as signalling is possible,
- signalling type information (sai) specifying the signalling type, and
- scope information (ui) specifying the number of simultaneously possible signalling and payload connections.

5. Method according to claim 4,
**characterised in that**
information (si, sai, ui) representing the switching-related options is in each case assigned to the channel information (vci) representing a virtual channel, as a result of which the virtual channel determined by the channel information (vci) is defined as a signalling channel.

6. Method according to one of claims 1 to 5,
**characterised in that**
the information (vpci, vci) representing the requested physical resources (R) is taken from the assigned logical access segment (ACC) as a function of the physical resources (R) requested by the communication partner (KP) in the course of a connection setup and entered into a logical line subsegment (LUP) provided with an identification (ID), where it is managed for the duration of the connection.

7. Method according to one of claims 1 to 6,
**characterised in that**
in the course of a connection setup for a communication partner (KP) the information (si, sai, ui) representing the switching-related options, which information is assigned to the information (vpci, vci..) representing the requested physical resources (R), is taken from the assigned logical access segment (ACC) and entered into a logical signalling subsegment (LCP) provided with an identification (ID), where it is managed for the duration of the connection.

8. Method according to claim 6,
**characterised in that**
for a physically independent connection control in the switching procedure structure (VPS), a plurality of logical line subsegments (LUP) are assigned to a connection segment (LINK) and managed in this structure for the duration of a connection, a connection segment (LINK) representing the physical resources (R) for a bidirectional partial connection as far as a through-connection point.

9. Method according to claims 6 to 8,
**characterised in that**
within the switching procedure structure (VPS)
- the switching paths are determined in a switching subprogram module (CPS) on the basis of the formed connection segments (LINK) and the switching-related setting information is formed by the specification of the connection segments (LINK) that are to be connected,
- the connection segments (LINK) are formed and managed in a logical switching subprogram module (LSS) and line subsegments (LUP) are transmitted from and to the logical switching subprogram module (LSS) and switching-related messages are transmitted to and from a physical switching subprogram module (PSS), and
- the line subsegments (LUP) are formed and managed in the physical switching subprogram module (PSS) with the aid of the access segments (ACC) and setting information effecting the physical through-connection is formed in accordance with the switching-related messages with the aid of the access segments (ACC).

10. Method according to one of the preceding claims,
**characterised in that**
the access segments (ACC) are set up or updated in the database (DB) by means of operations and maintenance messages after each configuring of the communication system (KS), with the operations and maintenance messages being formed under the control of an operator device or autonomously by an access segment routine.

## Revendications

1. Procédé pour réaliser une structure de procédure de commutation (VPS) indépendante du profil des ressources physiques d'un partenaire de communication (KP) connecté à un système de communication (KS), ladite structure de procédure de commutation (VPS) permettant d'effectuer une commande de liaison entre au moins deux partenaires de communication (KP) dont chacun se voit attribuer au moins une partie des ressources physiques (R) d'au moins une connexion de communication (A),
- dans lequel un segment d'accès logique (ACC) est installé et géré dans la base de données (DB) du système de communication (KS) pour chaque partenaire de communication (KP),
- chaque segment d'accès logique (ACC) comprenant
-- un identificateur (ID) identifiant le partenaire de communication (KP) respectif et au moins un synoptique des connexions (APV1,2) se rapportant à chaque fois à une connexion de communication (KA),
-- et dans un synoptique des connexions (APV1,2) étant inscrites
--- des informations ressources (vpci, vci, tri, wi, qi) indiquant les ressources physiques (R) de la connexion de communication (KA) attribuée au partenaire de communication (KP) respectif, ainsi que
--- des informations commutation (sai, ui), indiquant leurs possibilité orientée commutation (s).

2. Procédé selon la revendication 1,
**caractérisé en ce que**
les segments d'accès logiques (ACC) sont installés et gérés dans la base de données (DB) par des systèmes de communication ATM (KS) fonctionnant en mode de transfert asynchrone.

3. Procédé selon la revendication 1 ou 2,
**caractérisé en ce que**
dans les systèmes de communication (KS) fonctionnant suivant le mode de transfert asynchrone, les informations ressources (vpci, vci, tri, wi, qi) sont représentées par
- une information chemin de liaison (vpci) indiquant le nombre de chemins de liaison virtuels et une information canal (vci) indiquant le nombre de canaux virtuels dans un chemin de liaison virtuel,
- une information valeurs (wi) indiquant la gamme des valeurs des chemins de liaison et canaux virtuels,
- une information transfert (tri) indiquant la vitesse de transfert maximale pour la connexion de communication (KA) respective,
- une table indiquant l'association des informations chemin virtuel (vpi) aux informations chemin de liaison virtuel (vpci), et
- une information qualité (qi) indiquant la classe de transmission (UK) ou de service (DK).

4. Procédé selon l'une des revendications 1 à 3,
**caractérisé en ce que**
les possibilités orientées commutation (s) attribuées aux ressources physiques (R) sont définies dans un segment d'accès logique (ACC) par inscription
- d'une information signalisation (s) indiquant la possibilité de signalisation et, si une signalisation est possible,
- une information type de signalisation (sai) indiquant le type de signalisation, ainsi que
- une information volume (ui) indiquant le nombre de liaisons de signalisation et utiles simultanément possibles.

5. Procédé selon la revendication 4,
**caractérisé en ce que** les informations (si, sai, ui) représentant les possibilités orientées commutation sont à chaque fois associées aux informations canal (vci) représentant un canal virtuel, le canal virtuel déterminé par les informations canal étant ainsi défini comme canal de signalisation.

6. Procédé selon l'une des revendications 1 à 5,
**caractérisé en ce que**
selon les ressources physiques (R) demandées par le partenaire de communication (KP) dans le cadre de l'établissement d'une liaison, les informations (vpci, vci) représentant les ressources physiques (R) demandées sont extraites du segment d'accès (ACC) attribué et inscrites dans un segment partiel de connexion logique (LUP) muni d'un identificateur (ID) où elles sont gérées pour la durée de la liaison.

7. Procédé selon l'une des revendications 1 à 6,
**caractérisé en ce que**
dans le cadre de l'établissement d'une liaison pour un partenaire de communication (KP), les informations (si, sai, ui) représentant les possibilités orientées commutation (s) et qui sont associées aux informations (vpci, vci...) représentant les ressources physiques (R) demandées, sont extraites du segment d'accès logique (ACC) attribué et inscrites dans un segment partiel de signalisation logique (LCP) muni d'un identificateur (ID) où elles sont gérées pour la durée d'une liaison.

8. Procédé selon la revendication 6,
**caractérisé en ce que**
pour une commande de liaison physiquement indépendante dans la structure de procédure de commutation (VPS), plusieurs segments partiels de connexion logiques (LUP) y sont attribués à un segment de liaison (LINK) et gérés pour la durée d'une liaison, un segment de liaison (LINK) représentant les ressources physiques (R) pour une liaison partielle bidirectionnelle jusqu'à un point de commutation.

9. Procédé selon les revendications 6 à 8,
**caractérisé en ce que**
à l'intérieur de la structure de procédure de commutation (VPS),
- dans un module de sous-programme commutation (CPS), les chemins de commutation sont détectés sur la base des segments de liaison (LINK) formés, et les informations de réglage orientées commutation sont formées grâce à l'indication des segments de liaisons (LINK) devant être reliés,
- dans un module logique de sous-programme commutation (LSS), les segments de liaison (LINK) sont formés et gérés, et des segments partiels de connexion (LUP) en provenance et à destination de celui-ci ainsi que des messages orientés commutation à destination et en provenance d'un module physique de sous-programme commutation (PSS) sont transmis, et
- dans ledit module physique de sous-programme commutation (PSS), les segments partiels de connexion (LUP) sont formés et gérés à l'aide des segments d'accès (ACC), et selon les messages orientés commutation, à l'aide des segments d'accès (ACC), les informations de réglage effectuant la commutation physique sont établies.

10. Procédé selon l'une des revendications précédentes,
**caractérisé en ce que**
les segments d'accès (ACC) sont installés ou actualisés dans la base de données (DB) après chaque configuration du système de communication (KS) par des messages orientés fonctionnement, lesdits messages orientés fonctionnement étant formés par la commande d'un dispositif utilisateur ou bien de manière autonome par une routine pour segments d'accès.
